Europäisches Patentamt

European Patent Office

Office européen des brevets

(19)

(11) Numéro de publication: **0 058 615**
**B1**

(12) **FASCICULE DE BREVET EUROPEEN**

(45) Date de publication du fascicule du brevet:
21.08.85

(51) Int. Cl.⁴: **G 21 C 19/06**, F 16 F 7/12

(21) Numéro de dépôt: **82400249.7**

(22) Date de dépôt: **11.02.82**

(54) Dispositif d'amortissement contre les chocs provoqués par des objets lourds.

(30) Priorité: **13.02.81 FR 8102882**

(43) Date de publication de la demande:
**25.08.82 Bulletin 82/34**

(45) Mention de la délivrance du brevet:
**21.08.85 Bulletin 85/34**

(84) Etats contractants désignés:
**BE DE FR GB IT SE**

(56) Documents cités:
**DE - A - 2 212 684**
**DE - A - 2 613 655**
**FR - A - 1 451 407**
**FR - A - 2 840 559**
**GB - A - 928 111**
**US - A - 3 446 469**
**US - A - 4 227 593**

(73) Titulaire: **COMMISSARIAT A L'ENERGIE ATOMIQUE**
**Etablissement de Caractère Scientifique Technique et**
**Industriel, 31/33, rue de la Fédération, F-75015 Paris (FR)**

(72) Inventeur: **Chometon, Pierre, 2, rue Antonio Vivaldi,**
**F-78100 Saint Germain en Laye (FR)**
Inventeur: **Dollfus, Jacques, 38, Parc des Essarts,**
**F-78690 Les Essarts-le-Roi (FR)**

(74) Mandataire: **Mongrédien, André et al, c/o**
**BREVATOME 25, rue de Ponthieu, F-75008 Paris (FR)**

BUNDESDRUCKEREI BERLIN

## Description

La présente invention a pour objet un dipositif d'amortissement contre les chocs provoqués par des objets lourds et notamment les chutes accidentelles d'emballages de transport dans les piscines de déchargement de produits radioactifs, ces emballages étant appelés »châteaux« dans la suite du présent texte.

Etant donné qu'on ne peut jamais exclure un défaut de fonctionnement dans les dispositifs de manutention, il est nécessaire de se prémunir contre le risque de rupture ou de mauvais fonctionnement de système d'attache du château au moment où ce dernier se trouve au-dessus de la piscine de déchargement et au cours de la descente au fond de cette piscine.

Une rupture éventuelle de ce système entraînerait la chute du château qui, lors de son impact avec la paroi de la piscine, d'une part peut ouvrir une brèche dans cette paroi et d'autre part, éventuellement dans le cas d'un château très lourd, défoncer le radier en béton sur lequel est disposée la paroi et entraîner des désordres inacceptable dans les structures adjacentes.

On a déjà proposé diverses solutions è ce risque de détériorations. Par exemple, on a essayé d'interposer entre le fond de la piscine et le radier en béton une couche de béton cellulaire. Cependant, pour obtenir une action efficace, il faut que l'épaisseur de cette couche soit très importante (de l'ordre de plusieurs mètres pour un château d'environ 120 tonnes). Il faut de plus surveiller l'étanchéité de la piscine car ce béton cellulaire est nettement sensible à l'action de l'eau. Cette couche peut donc constituer un nid de contamination.

Une autre solution connue consiste à disposer sur le fond de la piscine des amortisseurs métalliques étanches à structure de nid d'abeile dont les alvéoles sont remplis d'air. Ces matelas sont efficaces mais onéreux. Il faut, en outre, éventuellement lester ou fixer ces matelas au fond de la piscine et en assurer l'étanchéité. En effet, remplis d'eau, ces matelas sont inefficaces. Par ailleurs, de tels matelas ne sont vraiment efficaces que s'ils reçoivent une force d'impact verticale et non pas oblique.

On a également proposé de disposer verticalement au fond de la piscine des tubes perforés remplis d'eau. Ces tubes ne se déforment pas de façon homogène et subissent une contre pression au moment du choc engendrée d'une part par une sortie relativement lente de l'eau à travers les orifices du tube, et, d'autre part, par l'incompressibilité de cette eau contenue dans le tube.

La présente invention a justement pour objet un dispositif qui remédie à ces inconvénients et présente notamment une bonne efficacité vis-à-vis des chocs obliques.

Selon la principale caractéristique du dispositif objet de l'invention, celui-ce, comprenant au moins un faisceau de pièces mécaniques déformables ayant une première extrémité reliée à une première plaque et une deuxième extrémité reliée à une deuxième plaque, les pièces mécaniques étant disposées perpendiculairement aux plaques, se caractérise en ce qu'une plaque supplémentaire, de masse sensiblement égale à celle de chaque pièce mécanique, est disposée entre cette dernière et la deuxième plaque, les plaques supplémentaires étant jointives et chaque pièce mécanique présentant au moins une prédéformation au voisinage de sa deuxième extrémité reliée à la deuxième plaque.

Ainsi, les plaques supplémentaires étant jointives et liées à la plaque supérieure, elles restent en contact les unes avec les autres, même en cas de choc oblique, ce qui permet à chaque pièce mécanique de se déformer librement, sans entrer en contact avec les pièces voisines.

Quant aux prédéformations, elles sont réalisées de telle sorte qu'elles évitent un pic de pression au moment du contact du chateau avec le dispositif décrit.

Selon une autre caractéristique la proportion des tubes est prévue de telle sorte que dans le cas d'une utilisation dans un liquide la part de surpression transmise par le liquide est négligeable.

Selon une autre caractéristique du dispositif objet de l'invention, ladite deuxième plaque comprend une tôle perforée fixée aux plaques supplémentaires et une tôle pleine fixée par ses bords à la face de la tôle perforée opposée aux plaques supplémentaires.

La tôle perforée assure la liaison entre les plaques supplémentaires de sorte qu'elles restent en contact les unes avec les autre et maintiennent les pièces mécaniques écartées les unes des autres au moment du choc, quelle que soit la direction de ce dernier. Quant à la tôle pleine, elle a surtout un rôle de protection vis-à-vis de la tôle perforée en pouvant glisser par rapport à cette dernière et en empêcher le poinçonnement.

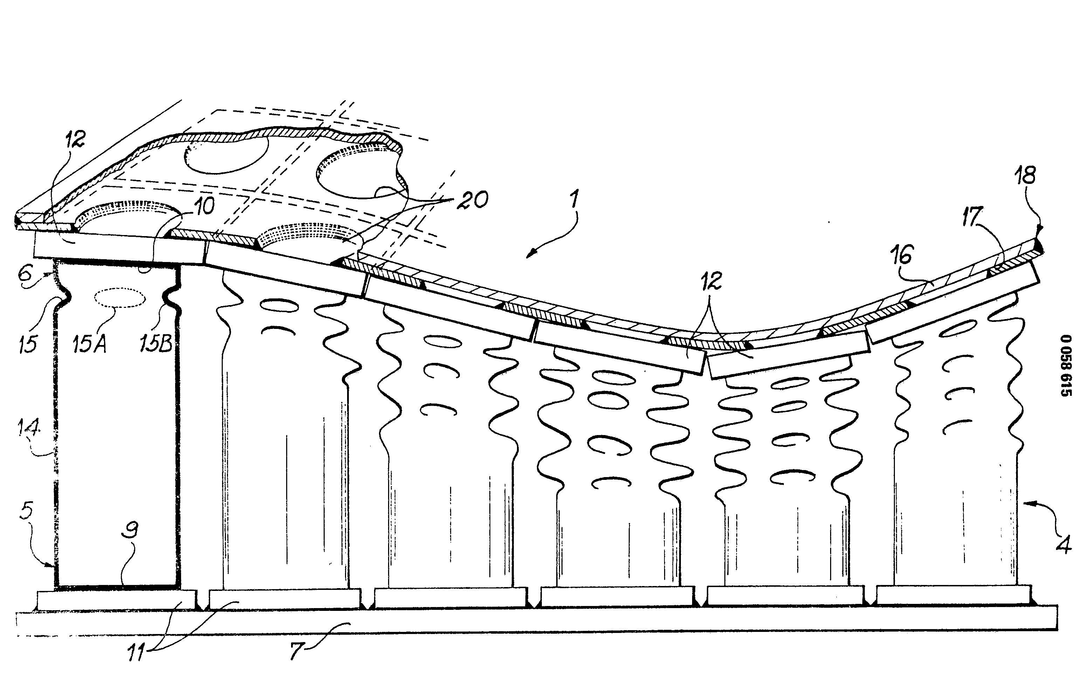

L'ivention sera mieux comprise à la lecture de la description qui va suivre d'un exemple de réalisation, description donnée à titre purement illustratif et nullement limitatif, en référence au dessin annexé, lequel comporte une figure unique représentant une vue schématique en coupe verticale et partiellement en perspective d'un dispositif d'amortissement selon l'invention après un choc provoqué par la chute d'un château de stockage.

Sur la figure, on voit le dispositif, portant la référence générale 1, posé sur la fond d'une piscine. L'amortisseur 1 est constitué d'un faisceau de tubes 4 disposés verticalement, dont la base 5 et le sommet 6 sont respectivement soudés à une première plaque ou plaque inférieure 7 et à une deuxième plaque ou plaque supérieure 18.

Chacun des tubes 4 est rempli d'air et est obturé à sa base et à son sommet respectivement par 2 bouchons métalliques soudés 9 et 10 sur lesquels on a soudé deux plaques de forme carré inférieure 11 et supérieure 12, elles-mêmes fixées par soudage respectivement à la plaque 7 et à la plaque supérieure 18. Les plaques 12 ou plaques supplémentaires ont des côtes de longueur supérieure au diamètre des tubes et sont jointives. La paroi latérale 14 de chaque tube présente dans une zone voisine du sommet une ou plusieurs amorces de déformation 15 ou prédéformations obtenues par pincement. Celle-ci ont pour but d'obliger le tube, sous l'action d'un choc, à se déformer par écrasement à partir du haut selon son propre mode de vibration. Ici, comme le tube se déforme suivant 3 directions, on a intérét à réaliser 3 prédéformations 15, 15A et 15B, situées dans un même plan horizontal et décalées les unes par rapport aux autres.

Sur la figure, on voit également la plaque supérieure 18, qui selon l'invention, se compose d'une tôle supérieure pleine 16 reliée à une tôle perforée 17 sur ses bords, par exemple par soudure.

La tôle 17 présente des perforations 20 en forme de trous circulaires ayant un diamètre sensiblement égal à celui des tubes 4 et situés à peu près à l'aplomb de ceux-ci. La tôle perforée 17 est soudée aux plaques supplémentaires 12 au niveau des perforations 20.

Dans l'exemple représenté ici, le dispositif a reçu un choc en un point situé vers la droit de la figure. L'ensemble des deux tôles 16 et 17 s'est déformé en écrasant plus ou moins les tubes situés en dessous. La tôle pleine 16 a une épaisseur telle qu'elle protège la tôle perforée 17 au moment de l'impact en pouvant glisser par rapport à celle-ci et en évitant le poinçonnement de la tôle perforée sous l'action du choc. Ainsi, même en cas de choc oblique, la tôle perforée 17 reste liée aux plaques supplémentaires 12 puisque c'est la tôle pleine qui glisse par rapport au reste du dispositif. L'épaisseur de la tôle perforée est telle qu'elle continue à assurer la liaison entre les plaques 12 après le choc pour que celles-ci restent en contact les unes avec les autres quelle que soit la direction de l'impact par rapport à l'axe des tubes. Ainsi, chaque tube peut se déformer sans risquer d'entrer en contact avec les tubes voisins, ce qui permet d'absorber un maximum d'énergie par écrasement. Il n'est pas néssaire que les plaques supplémentaires 12 soient parfaitement jointives: il suffit qu'elles soient suffisamment rapprochées pour que les tubes n'entrent pas en contact les uns avec les autres au moment du choc. Cette disposition permet aussi de répartir le choc sur un maximum de tubes.

Enfin, les prédéformations telles que 15, 15A, 15B, sont indispensables pour obliger le tube à s'écraser en évitant un pic de pression lors de l'impact. Leur importance résulte d'un compromis entre une trop faible déformation qui ne réduirait pas suffisamment le pic de pression et une trop grande déformation qui compromettrait la stabilité de la pièce lorsque celle-ci est chargée statiquement.

Dans l'exemple décrit ici, les dimensions de l'amortisseur ont été calculées afin de pouvoir résoudre le problème ci-dessous: On souhaite amortir une chute de 2,2 m dans l'air et de 10 m dans l'eau d'un château de 116 tonnes avec une course d'amortissement de 1 m (c'est-à-dire une diminution de la hauteur de l'amortisseur par plissement de la paroi latérale des tubes de 1 m).

Les conditions d'impact du château sont telles que l'angle du vecteur vitesse avec la verticale du centre de gravité du château peut atteindre 10° et la position du fond du château est telle que le château touche l'amortisseur suivant une arête, la face inférieure pouvant être inclinée à 45° par rapport à l'horizontale dans le cas le plus défavorable. La charge maximale instantanée ne dépasse pas l'une des valeurs suivantes en une zone quelconque:

$16 MN/2,4 \ m^2$.
$19,4 \ MN/4,8 \ m^2$.
$40 \ MN/12 \ m^2$.

La pression maximale retransmise sous le radier de béton armé d'épaisseur 1,65 m ne doit pas dépasser 10 bars dans la zone la plus sollicitée.

En outre, en fonctionnement normal, les amortissuers doivent supporter sans déformation une vitesse d'approche du château de 0,5 m/mn. De plus, la résultante des poussés hydrostatiques exercees sur le dispositif est telle que celui-ci est immobilisé en fond de piscine par son propre poids, ce qui rend inutile une fixation sur le fond de la piscine ou un lestage particulier.

Ce problème a été résolu selon l'invention en recouvrant le fond de la piscine d'un amortisseur conforme au dessin, formé de tubes ayant un diamètre extérieur de 408 mm, une pario latérale prédéformée d'épaisseur 4 mm, chaque tube étant obturé par 2 bouchons métalliques de 15 mm d'épaisseur sur lesquels sont soudées une plaque inférieure de 15 mm et d'autre part une plaque supplémentaire de 30 mm d'épaisseur. Les plaques supplémentaires sont soudées à une plaque supérieure continue de 16 mm d'épaisseur et les tubes sont uniformément répartis suivant une densité de 4 tubes/$m^2$. La hauteur des tubes est de 1515 mm. Le métal utilisé est un acier inoxydable Z2CN 15 10 (304 L).

Pour prédéformer les tubes, on les présente horizontalement dans une pince dont la mâchoire inférieure fixe présente une forme de V à sommet arrondi formé de 2 couteaux se coupant suivant un angle de 60° et dont la mâchoire supérieure mobile est un couteau droit, l'épaisseur du tranchant des 3 couteaux étant de 30 mm. On applique à la mâchoire mobile un effort approprié de façon à obtenir sur la surface latérale du tube, à 20 cm environ du sommet, une zone prédéformée de section triangulaire située à environ 20 cm du sommet et dont la flèche maximum est d'environ 40 mm.

Le dispositif selon l'invention présente des avantages intéressants et notamment en ce qui concerne sa résistance en cas de choc oblique.

En effet, les épaisseurs des tôles pleine et perforée constituant la plaque supérieure 18 sont telles que, même en cas de choc oblique, la tôle perforée se déforme tout en restant liée aux plaques supplémentaires 12 qui restent sensiblement jointives et permettent aux tubes de se déformer librement suivant leur axe vertical. Le dispositif absorbe ainsi une grande partie de l'énergie due au choc et évite un certain nombre d'inconvénients de l'art antérieur, comme le rebondissement du château par exemple.

Il est bien entendu que l'invention ne se limite pas au seul mode de réalisation qui vient d'être décrit, mais que des variantes sont possibles sans sortir pour autant du cadre de l'invention.

On peut par exemple remplacer les cylindres creux par des troncs de cône creux ou encore utiliser plusieurs faisceaux de pièces mécaniques selon l'invention placés les uns au-dessus des autres et reliés par des plaques intermédiaires.

Dans le cas d'utilisation dans l'eau, les tubes doivent être étanches au liquide. Les conditions de réalisation objet de la description permettent d'obtenir l'étanchéité avec la qualité requise mais il peut être avantageux de les remplir d'un matériau écrasable étanche au liquide, de préférence un matériau léger comme le polystyrène expansé. Ainsi les tubes remplis de ce matériau restent efficaces même si leur paroi n'est plus étanche au liquide.

Il est encore possible d'utiliser dans l'air des pièces mécaniques (cylindriques ou troncs de cône) dont la paroi latérale peut éventuellement être perforée.

On peut construire un dispositif d'amortissement selon l'invention de sorte qu'il soit solidaire d'une structure elle-même fixe ou mobile ou prévoir un dispositif mobile (par exemple simplement posé sur le fond d'une piscine) que l'on peut déplacer d'une installation à l'autre. On peut aussi réaliser un tel dispositif en un seul bloc de dimensions relativement importantes ou disposer les uns à côté des autres plusieurs amortisseurs de taille plus réduite.

Enfin, si dans l'exemple décrit ici le dispositif est placé verticalement pour protéger le fond d'une piscine, on peut envisager des applications où les première et deuxième plaques encadrant les pièce déformables ont une orientation quelconque: la deuxième plaque et les plaques supplémentaires sont toujours placées du côté exposé aux chocs.

Le dispositif selon l'invention est utilisable dans tous les cas où des chutes ou chocs d'objets lourds sont à craindre, que ce soit en milieu liquide ou dans l'air.

## Revendications

1. Dispositif d'amortissement contre les chocs provoqués par des objets lourds, comprenant au moins un faisceau de pieces mécaniques déformables (4) ayant une première extrémité reliée à une première plaque (7) et une deuxième extrémité reliée à une deuxième plaque (18), les pièces mécaniques (4) étant disposées perpendiculairement aux plaques (7) et (18), caractérisé en ce qu'une plaque supplémentaire (12), de masse sensiblement égale à celle de chaque pièce mécanique (4), est disposée entre cette dernière et la deuxième plaque (18), les plaques supplémentaires (12) étant jointives et chaque pièce mécanique (4) présentant au moins une prédéformation (15) au voisinage de sa deuxième extrémité reliée à la deuxième plaque (18).

2. Dispositif selon la revendication 1 caractérisé en ce que ladite deuxième plaque (18) comprend une tôle perforée (17) fixée aux plaques supplémentaires (12) et une tôle pleine (16) fixée par ses bords à la face de la tôle perforée (17) opposée aux plaques supplémentaires (12).

3. Dispositif selon l'une quelconque des revendications 1 ou 2, caractérisé en ce que les pièces mécaniques (4) sont des pièces creuses.

4. Dispositif selon la revendication 3, caractérisé en ce que les pièces mécaniques (4) sont constituées par des cylindres creux de section droite circulaire.

5. Dispositif selon la revendication, caractérisé en ce que les pièces mécaniques (4) sont constituées par des troncs de cône creux.

6. Dispositif selon l'une quelconque des revendications 3 à 5, caractérisé en ce que l'intérieur des pièces mécaniques (4) est rempli d'un matériau solide écrasable étanche au liquide.

7. Dispositif selon l'une quelconque des revendications 1 à 6, caractérisé en ce que les pièces mécaniques (4) comportent une paroi latérale perforée pour une utilisation dans l'air.

8. Dispositif selon l'une quelconque des revendications 1 à 7, caractérisé en ce que les pièces mécaniques (4) sont réalisées en acier inoxydable.

9. Dispositif selon l'une quelconque des revendications 1 à 8, caractérisé en ce qu'il comporte au moins deux faisceaux de pièces mécaniques (4) reliées à une plaque supérieure (18) et une plaque inférieure (7), les deux faisceaux étant disposés l'un au-dessus de l'autre.

## Patentansprüche

1. Stoßdämpfungsanordnung gegen durch schwere Gegenstände erzeugte Stöße, enthaltend wenigstens eine Gruppe mechanisch deformierbarer Elemente (4), die ein erstes Ende, das mit einer ersten Platte (7) und ein zweites Ende, das mit einer zweiten Platte (18) verbunden ist, aufweisen, wobei die mechanischen Elemente (4) senkrecht zu den Platten (7) und (18) angeordnet sind, dadurch gekennzeichnet, daß eine zusätzliche Platte (12) von im wesentlichen gleicher Masse wie jene des mechanischen Elements (4) zwischen letzterem und der zweiten Platte (18) angeordnet ist, und daß die zusätzlichen Platten (12) lückenlos aneinander stoßen und jedes mechanische Element (4) wenigstens eine Vorverformung (15) benachbart seinem zweiten Ende aufweist, das mit der zweiten Platte (18) verbunden ist.

2. Anordnung nach Anspruch 1, dadurch gekennzeichnet, daß die zweite Platte (18) enthält: ein perforiertes Blech (17), das an den zusätzlichen Platten (12) befestigt ist, und ein durchgehendes Blech (16), das an seinen Rändern auf der Oberseite des perforierten Bleches (17) gegenüber den zusätzlichen Platten (1) befestigt ist.

3. Anordnung nach einem der Ansprüche 1 oder 2, dadurch gekennzeichnet, daß die mechanischen Elemente (4) hohle Elemente sind.

4. Anordnung nach Anspruch 3, dadurch gekennzeichnet, daß die mechanischen Elemente (4) von hohlen Zylindern von gleichmäßig kreisförmigem Querschnitt gebildet sind.

5. Anordnung nach Anspruch 3, dadurch gekennzeichnet, daß die mechanischen Elemente (4) von hohlen Kegelstümpfen gebildet sind.

6. Anordnung nach einem der Ansprüche 3 bis 5, dadurch gekennzeichnet, daß der Innenraum der mechanischen Elemente (4) mit einem zusammendrückbaren Feststoff gefüllt sind, der flüssigkeitsdicht ist.

7. Anordnung nach einem der Ansprüche 1 bis 6, dadurch gekennzeichnet, daß die mechanischen Elemente (4) eine durchbrochene Querwand für einen Gebrauch in Luft aufweisen.

8. Anordnung nach einem der Ansprüche 1 bis 7, dadurch gekennzeichnet, daß die mechanischen Elemente (4) aus rostfreiem Stahl bestehen.

9. Anordnung nach einem der Ansprüche 1 bis 8, dadurch gekennzeichnet, daß sie wenigstens zwei Gruppen mechanischer Elemente (4) enthält, die an einer oberen Platte (18) und einer unteren Platte (7) miteinander verbunden sind, wobei die beiden Gruppen übereinander angeordnet sind.

## Claims

1. Shock-absorbing device against shocks produced by heavy objects, comprising at least one bundle of mechanically-deformable members (4) having a first end connected to a first plate (7) and a second end connected to a second plate (18), the members (4) being disposed perpendicularly to the plates (7) and (18), characterized in that a supplementary plate (12) whose mass is substantially equal to that of the mechanical member (4) is located between the latter and the second plate (18), the supplementary plates (12) being articulated and each member (4) having at least one predeformation (15) near said second end connected to the second plate (18).

2. Device according to Claim 1, characterized in that said second plate (18) comprises a perforated sheet (17) fixed to the supplementary plates (12) and a solid sheet (16) fixed at its edges to the surface of the perforated sheet (17) opposite the supplementary plates (12).

3. Device according to either of Claims 1 or 2, characterized in that the members (4) are hollow.

4. Device according to Claim 3, characterized in that the members (4) comprise hollow cylinders of circular cross-section.

5. Device according to Claim 3, characterized in that the members (4) comprise hollow truncated cones.

6. Device according to any one of Claims 3 to 5, characterized in that the interior of the members (4) is filled with a deformable liquid-tight solid material.

7. Device according to any one of Claims 1 to 6, characterized in that the members (4) comprise a perforated side wall for use in air.

8. Device according to any one of Claims 1 to 7, characterized in that the members (4) are formed from stainless steel.

9. Device according to any one of Claims 1 to 8, characterized in that it comprises at least two bundles of members (4) connected to an upper plate (18) and a lower plate (7), the two bundles being disposed one above the other.

0 058 615